# EUROPEAN PATENT APPLICATION

(11) **EP 1 191 464 A1**
(43) Date of publication of application: **27.03.2002**
(21) Application number: 01921924.5
(22) Date of filing: 19.04.2001
(51) Int. Cl.: G06F 17/30, G06T 7/00, G06T 7/20, H04N 5/76

(54) **INFORMATION RETRIEVING DEVICE**

(30) Priority: 25.04.2000 JP 2000124812
(71) Applicant: MITSUBISHI DENKI KABUSHIKI KAISHA, Tokyo 100-8310 (JP)
(72) Inventor: KANDA, Junshiro c/o Mitsubishi Denki Kabushiki K., Tokyo 100-8310 (JP); WAKIMOTO, Koji c/o Mitsubishi Denki Kabushiki Kai., Tokyo 100-8310 (JP)
(74) Representative: Pfenning, Meinig & Partner
(86) International application number: JP0103367
(87) International publication number: WO0182131

(57) **Abstract**

A data input processing section (1) input-processes information which is continuous over time, a data extracting section (4) defines, as a plurality of data units, portion information which is continuous over time which forms the information which is continuous over time, a feature amount extracting section (5) extracts a predetermined feature amount for each data unit, and a sorting section (6) orders respective data units on the basis of feature amounts of the respective data units. An index image generating section (7) generates, for each data unit, a visualized index image on the basis of the feature amount, and arranges-outputs the index information on the basis of the ordering of the sorting section (6), a playback processing section (8) plays back at least the information which is continuous over time and the data units, and a playback instructing section (11) instructs the playback processing section (8) to carry out playback processing of data units corresponding to index images.

## Description

### TECHNICAL FIELD

The present invention relates to a method of and a device for retrieving information, and a computer program for executing the method according to the present invention on a computer. More particularly, this invention relates to a method of retrieving desired information from an information which is continuous over time such as motion picture, or music.

### BACKGROUND ART

Conventionally, systems providing an information retrieving service such as, for example, InfoSeek or the like, have been known as systems for retrieving various types of information through the Internet. In such an information retrieving system, first, from a WEB page, which is data which is the object of retrieval, a title, main phrases within the text, words within the text, and the like are extracted and stored in advance. Thereafter, when a user designates a word as a retrieval condition, WEB pages containing this designated word are selected out. These selected-out WEB pages are ordered by using a predetermined method, such as, for example, the updating date and time or the goodness of fit with respect to the word or the like. In accordance with this order, the title or main phrases are provided as index information. On the basis of the provided index information, the user determines the desired WEB page. A link to the corresponding WEB page is set in each index information. By the user clicking on and selecting the index information, the corresponding WEB page can be called up and viewed on the screen of the user.

The data which is the object of retrieval by such an information retrieval system was conventionally centered around text data. However, in recent years, services for providing, through the Internet and in the same way as text data, data which is continuous over time such as motion picture data or music data or the like, have been carried out. When such data which is continuous over time is the subject of retrieving, there are problems such as the following.

First, when data which are continuous over time such as motion picture data or music data are retrieved, various data units, which have different lengths, are the objects of retrieving. Thus, there is the problem that the number of data units to be accumulated becomes huge. Namely, when a WEB page which centers on text data is the object of retrieving, a usual page is the object. Thus, it suffices to register the data by using a page as a unit. However, in retrieving motion picture data or music data, for example, there are cases in which an entire movie work which lasts for several hours is used, and there are cases in which it is desired to use scenes of a mere one or two seconds from a movie work. Thus, in order to address various retrieval requests for data which is continuous over time, a series of data which is continuous over time is sectioned into various levels of fineness, and the data must be registered in these sectional data units.

For example, when a motion picture work which is one hour long is sectioned into four levels which are "each 10 seconds", "each 30 seconds", "each 5 minutes", and "entire work" and the data is registered as the respective data units, 360 + 120 + 12 + 1 = 493 objects of retrieval are defined for this one motion picture work. Accordingly, when there is a large number of motion picture works, the number of data units which are objects of retrieval becomes huge, and there is the problem that the accumulation efficiency of motion picture works is extremely poor.

Second, there is the problem that, in the retrieval of data which is continuous over time, time is required in order to confirm the data contents. Namely, in the data retrieval, after narrowing down the objects of retrieval by a keyword such as the title as described above, a process is needed for successively confirming the contents of the retrieved data and finding the target data. When a WEB page which centers on text data is the object of retrieval, if the WEB page is displayed on the screen, the contents can be confirmed almost instantaneously. However, in the case of data which is continuous over time, a problem arises in that, in order to confirm the data contents, usually, a period of time which is equal to the duration time of the retrieved data is required.

Due to the above-described first problem, the number of data units which are objects of retrieval is huge. Unless an extremely exact keyword is added to each data unit, it is not possible to sufficiently carry out narrowing-down by retrieval of a keyword such as the title or the like, and a large number of data units are extracted as the retrieval results. When this large number of data units is extracted, due to the above-described second problem, a problem arises in that a huge amount of time is needed in order to confirm the contents of the object of retrieval.

In order to overcome such problems, for example, a device for retrieving motion picture is disclosed in Japanese Patent Application Laid-Open (JP-A) No. 8-249348 wherein, for each motion picture which is the object of retrieval, at least one image data which represents the motion picture is held as index information, and by displaying this image data in a list on a display device, retrieving by the user is assisted. In accordance with this device for retrieving motion picture, even if the scenes in the motion pictures are not played back one-by-one, by referring to the representative image, the approximate contents of the scene can be grasped, and as a result, efficient retrieval can be carried out.

Further, a representative image presenting method is disclosed in Japanese Patent Application Laid-Open (JP-A) No. 4-347772 wherein information, such as brightness, color, movement of the photographed subject, and the like, for a scene or cut is digitized and added to a screen which represents the scene or cut in a dynamic image, and on the basis of this number, the screens are arranged and presented. In accordance with this representative image presenting method, data units which have similar features are presented in proximity. Thus, it suffices for the user to look, with priority, for the desired data unit. In this way, the time required for confirming the contents can be shortened.

Japanese Patent Application Laid-Open (JP-A) No. 9-214866 discloses a device for retrieving dynamic image which detects changes arising in the photographed subject in each scene, and by presenting information relating to these changes together with representative images extracted from these scenes, assists retrieval by the user.

Further, Japanese Patent Application Laid-Open (JP-A) No. 11-242542 discloses a summary preparing and displaying device which defines relationships between data units, and on the basis of the defined relationships, arranges and displays index information for the respective data units. When the summary preparing and displaying device defines, as a data unit, one relatively long scene and a plurality of relatively short scenes included therein, index images are hierarchically arranged on the basis of the parentage between the respective data units. By presenting this to the user, the relationships between the data units can be easily grasped. Further, by joining together, in the short side direction, long and thin rectangular images on the basis of the time order relationships between the data units, index images for a plurality of data units can be presented in a limited area.

In accordance with this summary preparing and displaying device, when data units of various levels are the objects of retrieval, the relationships between the data units can be presented to the user in an easy to understand manner, and the user can quickly find the target data. Further, because index images corresponding to a plurality of data units are joined together and presented and many index images can be presented in a limited area, the work for confirming the index images by the user can be reduced.

Further, a device for expressing motion picture management map is disclosed in Japanese Patent Application Laid-Open (JP-A) No. 8-87525 wherein, due to feature amounts of retrieved results being visualized and arranged on a three dimensional plane, the relationships between the data can be grasped.

Further, a device for retrieving motion picture database is disclosed in Japanese Patent Application Laid-Open (JP-A) No. 11-175561 wherein, in a motion picture database, the feature amount of each scene in a motion picture is visualized and displayed, and a view over a wide range is thereby possible.

However, in the above-described conventional motion picture retrieving device, there is the problem that, because one or several static images are pulled out from the motion picture and displayed, it cannot be judged what type of changes there are in the motion pictures other than the representative images, and if the scenes are not played back, the detailed contents cannot be grasped.

For example, if the number of representative images which can be displayed on one screen is "50", in order to display on the screen and confirm 1000 representative images, screen switchings must be carried out 20 times, and the work for sequentially switching the screens is complicated. When a large number of objects of retrieval are extracted by keyword retrieval, as before, time is required to confirm the contents.

Further, in the above-described conventional representative screen presenting method, because not the feature amounts but the representative images are presented, if only the representative images are viewed, it is difficult to grasp what type of feature each data unit has, and the number of representative images which can be displayed and viewed on one screen is limited. Therefore, first, in order to find a data unit which is similar to the desired data unit, it is necessary to confirm the contents while screen switching is carried out many times. As before, there is the problem that time is required to confirm the contents.

Further, in the above-described conventional device for retrieving motion picture, changes which arise at portions other than the representative images are easy to grasp. However, if there is a large number of data which are retrieved by keyword retrieval, as before, there is the problem that time is required to confirm the contents.

Further, in the above-described conventional summary preparing and displaying device, as the relationship between data units, attention is mainly focused on the included-over-time relationship and the before-and-after relationship. When a large number of data units, which are respectively extracted from different motion picture works, are retrieved, a problem arises in that the appropriate relationship between these data units cannot be defined, and, as before, time is required in order to confirm the contents. Further, in the above-described conventional device for expressing motion picture management map, retrieval results are arranged in a three dimensional space. However, because the display means is in two dimensions, when the necessary data exists in a third axial direction, the axial direction must be switched. As before, there is the problem that time is required to confirm the contents.

Further, in the above-described conventional device for database retrieving motion picture, when the feature amount is visualized and displayed, the retrieval results are only aligned and displayed. Because the retrieval results are not ordered on the basis of their feature amounts, in order to find the desired information, the contents of all retrieval results must be viewed. To this end, it is necessary to move the screen and to switch the display, and the contents of the retrieval results cannot be grasped at a glance. As before, there is the problem that time is required to confirm the contents.

As described above, the object of the present invention to provide a method of and a device for retrieving information, and a computer program for executing the method according to the present invention on a computer. The method according to the present invention is a method of retrieving desired data unit quickly and easily when an information which is continuous over time is retrieved.

### DISCLOSURE OF THE INVENTION

The device for retrieving desired information from an information which is continuous over time according to one aspect of the present invention comprises: an input processing unit which carries out input processing of the information which is continuous over time; a defining unit which defines, as a plurality of information units, portion information which is continuous over time which forms the information which is continuous over time; a feature amount extracting unit which extracts a predetermined feature amount for each information unit; a sorting unit which arranges in order the respective information units on the basis of the feature amounts of the respective information units; an index image generating unit which generates, for each information unit, a visualized index image on the basis of the feature amount, and for arranging-outputting the index information on the basis of the ordering of the sorting unit; a playback unit which plays back at least the information which is continuous over time and the information units; and a playback instructing unit which instructs the playback unit to carry out playback processing of the information units corresponding to the index images.

According to the above-mentioned aspect, the defining unit defines, as a plurality of information units, portion information which is continuous over time and which forms the information which is continuous over time which is inputted from the input processing unit. The feature amount extracting unit extracts a predetermined feature amount for each information unit, and the sorting unit orders the respective information units on the basis of the feature amounts of the respective information units. The index image generating unit generates, for each information unit, a visualized index image on the basis of the feature amount, and arranges-outputs the index information on the basis of the ordering of the sorting unit. The playback instructing unit instructs the playback unit to carry out playback processing of the information units corresponding to the index images, and the playback unit plays back at least the information which is continuous over time and the information units.

Moreover, the defining unit defines the information units by applying thereto a hierarchical relationship which is included over time.

Thus, the defining unit defines the information units by applying thereto a hierarchical relationship which is included over time.

Furthermore, the defining unit defines scenes within the information which is continuous over time or switching points of topics as a starting point and an ending point of the information unit.

Thus, the defining unit defines scenes within the information which is continuous over time or switching points of topics as a starting point and an ending point of the information unit, and can define the information units automatically.

Moreover, the feature amount extracting unit extracts a feature amount relating to movement of a photographed subject.

Thus, the feature amount extracting unit extracts a feature amount relating to the movement of the photographed subject, and can retrieve the desired information unit on the basis of the feature of the movement of the photographed subject.

Furthermore, the feature amount extracting unit extracts a feature amount relating to color tint or to changes in color tint.

Thus, the feature amount extracting unit extracts a feature amount relating to the color tint or a change in color tint, and can retrieve the desired information unit on the basis of the feature of the color tint or the change in the color tint.

Moreover, the feature amount extracting unit extracts a feature amount relating to brightness or to changes in brightness.

Thus, the feature amount extracting unit extracts a feature amount relating to brightness or a change in brightness, and can retrieve the desired information unit on the basis of the brightness or a change in the brightness.

Furthermore, the index image generating unit generates an index image which is vertically long for each information unit, and arranges and outputs the index images in a lateral direction.

Thus, the index image generating unit generates an index image which is vertically long for each information unit, and arranges and outputs the index images in a lateral direction. The index images of the respective information units are easily viewed and are easily recognized.

Moreover, the index image generating unit generates an index image which is laterally long for each information unit, and arranges and outputs the index images in a vertical direction.

Thus, the index image generating unit generates an index image which is laterally long for each information unit, and arranges and outputs the index images in a vertical direction. The index images of the respective information units are easily viewed and are easily recognized.

Furthermore, the index image generating unit forms an index image having a width which is proportional to a duration time of the information unit.

Thus, the index image generating unit forms an index image having a width which is proportional to a duration time of the information unit. Grasping, over time, of the information units can be carried out easily.

Moreover, when a current information unit has an information unit which is included over time, the index image generating unit generates and arranges-outputs an index image of the current information unit.

Thus, when a current information unit has an information unit which is included over time, the index image generating unit generates and arranges-outputs an index image of the current information unit. An index image of the information unit which is included over time is not displayed.

Furthermore, the playback instructing unit displays a slide bar and the index images in parallel, and selects an index image corresponding to a position designated by the slide bar.

Thus, the playback instructing unit displays a slide bar and the index images in parallel, and selects an index image corresponding to a position designated by the slide bar. The relationship between the slide bar and the information unit which corresponds to the index image can be easily grasped.

Moreover, the defining unit defines a static image of a predetermined frame within the information unit as a representative image, the playback instructing unit instructs the playback unit to display the representative image of the information unit corresponding to the index image corresponding to the position designated by the slide bar, while a knob of the slide bar is being dragged, and the playback unit displays the representative image instructed by the playback instructing unit.

Thus, the playback instructing unit instructs the playback unit to display the representative image of the information unit corresponding to the index image corresponding to the position designated by the slide bar, while a knob of the slide bar is being dragged, and the playback unit displays the representative image.

Furthermore, the playback instructing unit instructs the playback unit to playback the information unit corresponding to the index image corresponding to the position designated by the slide bar, when a knob of the slide bar is released, and the playback unit starts playback of the information unit instructed by the playback instructing unit.

Thus, the playback instructing unit instructs the playback unit to playback the information unit corresponding to the index image corresponding to the position designated by the slide bar, when a knob of the slide bar is released. The playback unit playbacks the information unit immediately.

Moreover, the playback unit plays back the information units continuously, in accordance with the order ordered by the sorting unit.

Thus, the playback unit plays back the information units continuously, in accordance with the order ordered by the sorting unit.

Furthermore, the playback unit displays a list of other information units including information units which are currently being played back.

Thus, the playback unit displays a list of other information units including information units which are currently being played back.

Moreover, the playback unit emphasizingly displays a list of the information units which are currently being played back.

Thus, the playback unit emphasizingly displays a list of the information units which are currently being played back.

The method of retrieving desired information from an information which is continuous over time according to one aspect of the present invention comprises : a defining step of defining, as a plurality of information units, portion information which is continuous over time which forms the information which is continuous over time; a feature amount extracting step of extracting a predetermined feature amount for each information unit; a sorting step of ordering the respective information units on the basis of the feature amounts of the respective information units; an index image generating step of generating, for each information unit, a visualized index image on the basis of the feature amount, and for arranging-outputting the index information on the basis of the ordering by the sorting step; and a playback step of playing back at least the information units on the basis of an instruction for playback processing of information units corresponding to the index images.

Thus, in the defining step, portion information, which is continuous over time which forms the information which is continuous over time, is defined as a plurality of information units. In the feature amount extracting step, a predetermined feature amount is extracted for each information unit. In the sorting step, the respective information units are ordered on the basis of the feature amounts of the respective information units. In the index image generating step, for each information unit, a visualized index image is generated on the basis of the feature amount, and the index information is arranged-outputted on the basis of the ordering by the sorting step. In the playback step, at least the information units are played back on the basis of an instruction for playback processing of information units corresponding to the index images.

Furthermore, the defining step defines the information units by applying thereto a hierarchical relationship which is included over time.

Thus, the defining step defines the information units by applying thereto a hierarchical relationship which is included over time.

Moreover, the defining step defines scenes within the information which is continuous over time or switching points of topics as a starting point and an ending point of the information unit.

Thus, the defining step defines scenes within the information which is continuous over time or switching points of topics as a starting point and an ending point of the information unit.

Furthermore, the feature amount extracting step extracts a feature relating to movement of a photographed subject.

Thus, the feature amount extracting step extracts a feature relating to movement of a photographed subject.

Moreover, the feature amount extracting step extracts a feature amount relating to color tint or to changes in color tint.

Thus, the feature amount extracting step extracts a feature amount relating to color tint or to changes in color tint.

Furthermore, the feature amount extracting step extracts a feature amount relating to brightness or to changes in brightness.

Thus, the feature amount extracting step extracts a feature amount relating to brightness or to changes in brightness.

Moreover, the index image generating step generates an index image which is vertically long for each information unit, and arranges and outputs the index images in a lateral direction.

Thus, the index image generating step generates an index image which is vertically long for each information unit, and arranges and outputs the index images in a lateral direction.

Furthermore, the index image generating step generates an index image which is laterally long for each information unit, and arranges and outputs the index images in a vertical direction.

Thus, the index image generating step generates an index image which is laterally long for each information unit, and arranges and outputs the index images in a vertical direction.

Moreover, the index image generating step forms an index image having a width which is proportional to a duration time of the information unit.

Thus, the index image generating step forms an index image having a width which is proportional to a duration time of the information unit.

Furthermore, when a current information unit has an information unit which is included over time, the index image generating step generates and arranges-outputs an index image of the current information unit.

Thus, when a current information unit has an information unit which is included over time, the index image generating step generates and arranges-outputs an index image of the current information unit.

Moreover, the playback step displays a slide bar and the index images in parallel, and selects an index image corresponding to a position designated by the slide bar, and plays back the information unit corresponding to the selected index image.

Thus, the playback step displays a slide bar and the index images in parallel, and selects an index image corresponding to a position designated by the slide bar, and plays back the information unit corresponding to the selected index image.

Furthermore, the defining step defines a static image of a predetermined frame within the information unit as a representative image, and the playback step displays the representative image of the information unit corresponding to the index image corresponding to the position designated by the slide bar, while a knob of the slide bar is being dragged.

Thus, the defining step defines a static image of a predetermined frame within the information unit as a representative image, and the playback step displays the representative image of the information unit corresponding to the index image corresponding to the position designated by the slide bar, while a knob of the slide bar is being dragged.

Furthermore, the playback step starts playback of the information unit corresponding to the index image corresponding to the position designated by the slide bar, when a knob of the slide bar is released.

Thus, the playback step starts playback of the information unit corresponding to the index image corresponding to the position designated by the slide bar, when a knob of the slide bar is released.

Moreover, the playback step plays back the information units continuously, in accordance with the order ordered by the sorting step.

Thus, the playback step plays back the information units continuously, in accordance with the order ordered by the sorting step.

Furthermore, the playback step displays a list of other information units including information units which are currently being played back.

Thus, the playback step displays a list of other information units including information units which are currently being played back.

Moreover, the playback step emphasizingly displays a list of the information units which are currently being played back.

Thus, the playback step emphasizingly displays a list of the information units which are currently being played back.

The computer program for executing, on a computer, relating to the next invention is a program which executes, on a computer, any of the methods described above. Thus, the method according to the present invention can be realized by a computer.

### BRIEF DESCRIPTION OF THE DRAWINGS

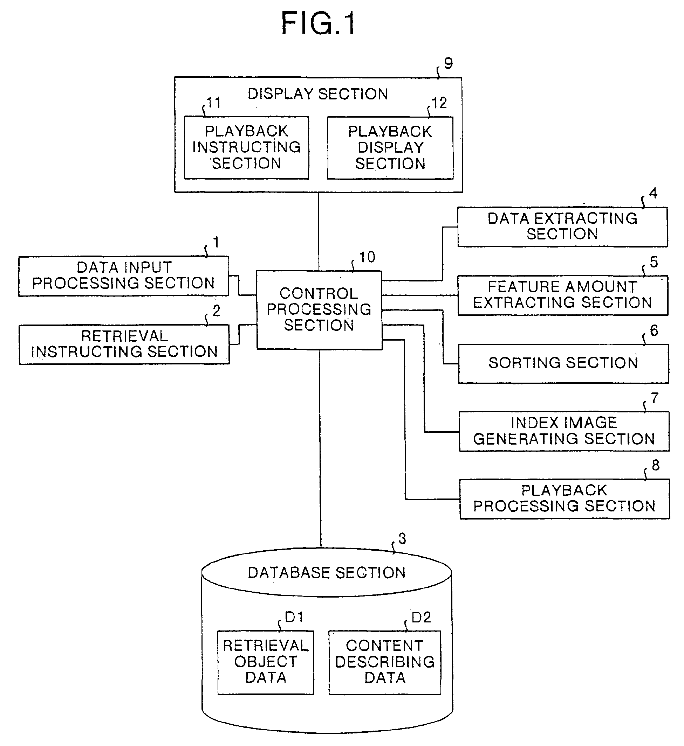

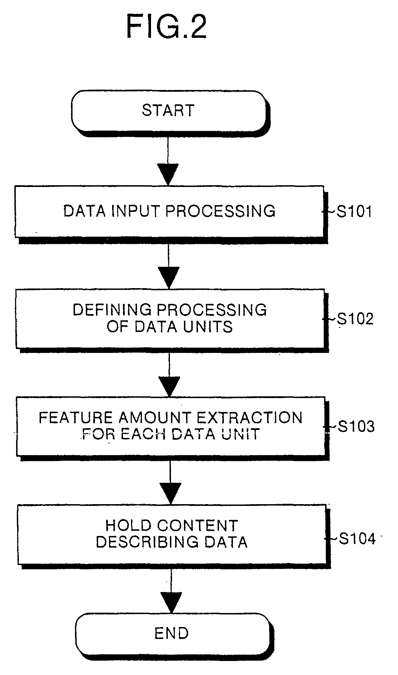

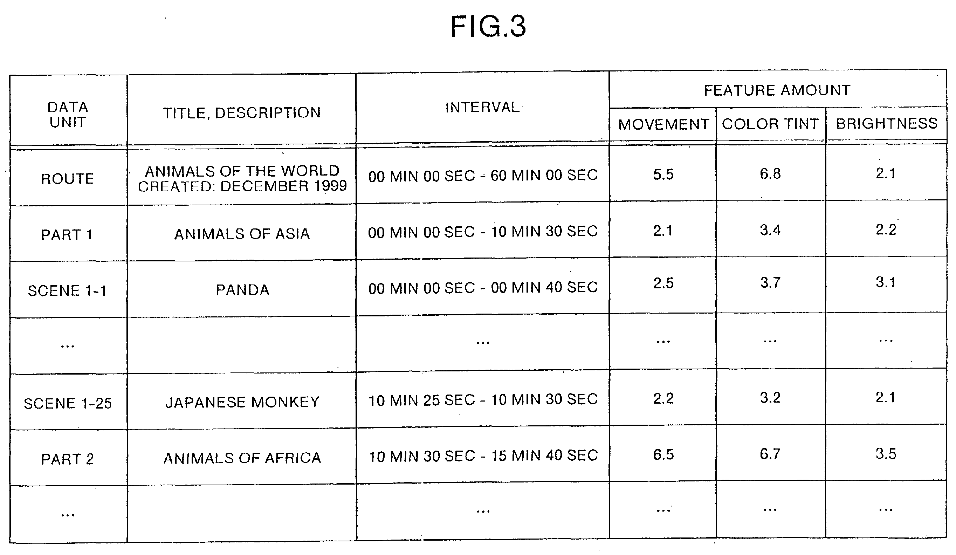

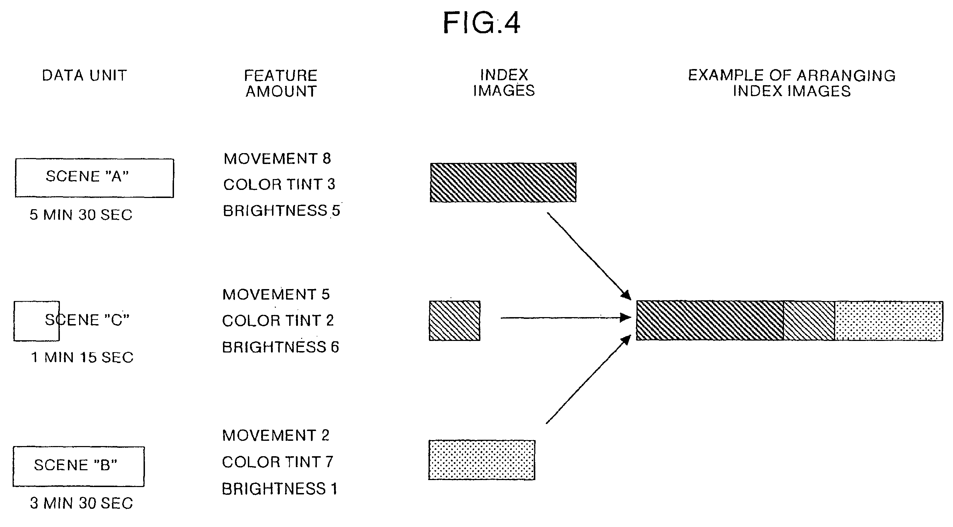

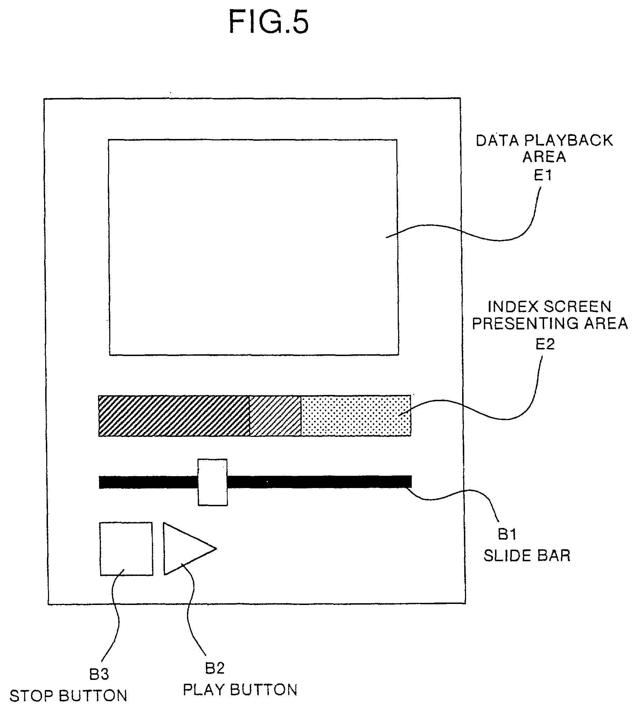

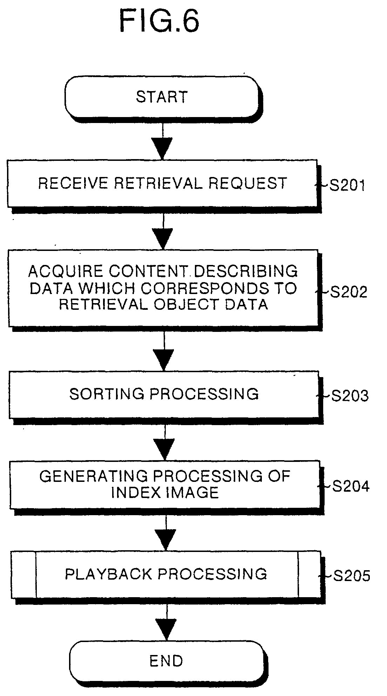

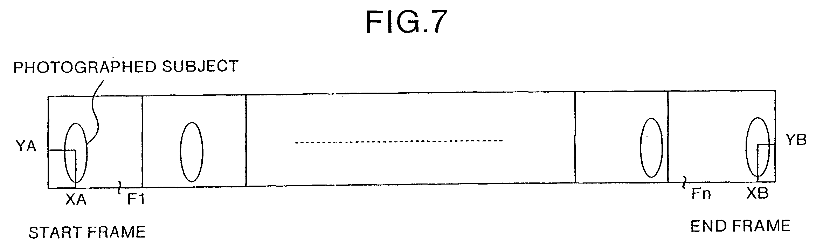

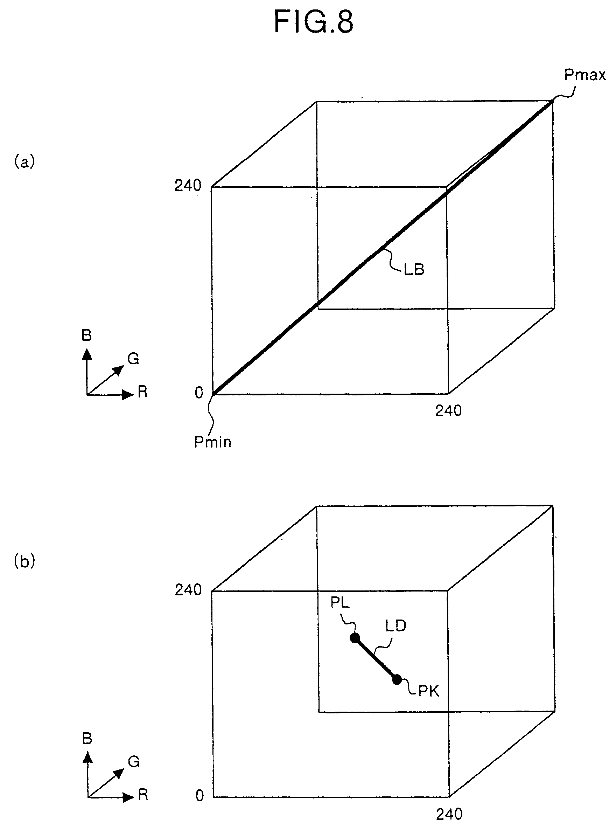

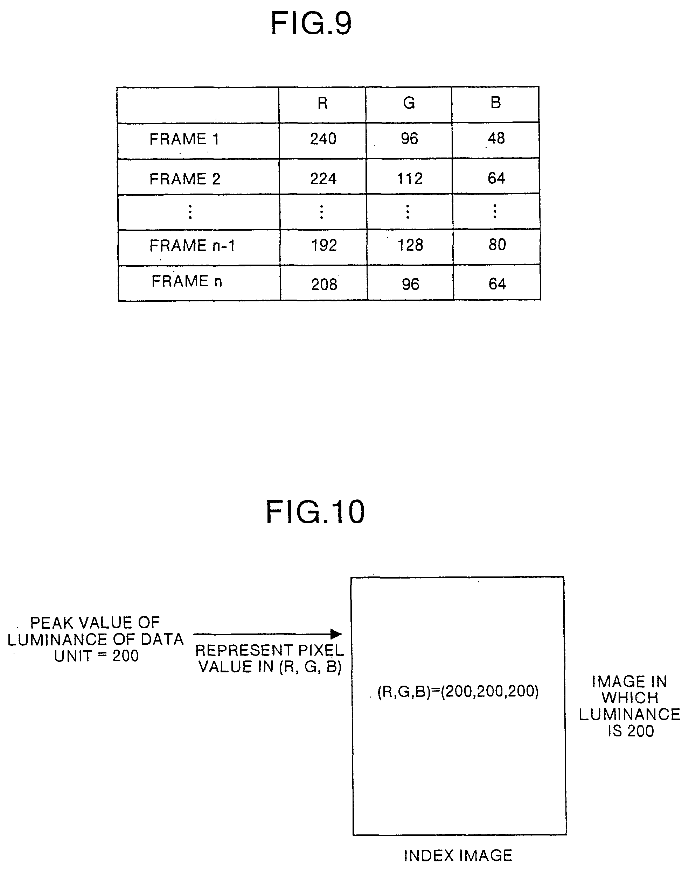

Fig. 1 is a block diagram showing the structure of a device for retrieving information according to a first embodiment of the present invention; Fig. 2 is a flowchart showing an order of processings from defining of a data unit to generating of content describing data; Fig. 3 is a diagram showing an example of content describing data; Fig. 4 is diagram explaining generation of index images and arrangement of the index images; Fig. 5 is a portion showing the structure of a display section; Fig. 6 is a flowchart showing an order of processings from instruction of retrieval to playback of a retrieval object; Fig. 7 is a diagram explaining a processing of extracting the feature amount of "movement"; Fig. 8 is a diagram explaining a processing of extracting the feature amount of "color tint"; Fig. 9 is a table showing an example of a processing of extracting the feature amount of "color tint"; Fig.
10 is a diagram showing an example of generation of an index image; Fig. 11 is a diagram showing an example of generation of an index image; Fig. 12 is a diagram showing an example of generation of an index image; Fig. 13 is a flowchart showing an order of detailed processings of playback processing; Fig. 14 is a diagram explaining a data unit selection processing by a playback instructing section; Fig. 15 is a diagram showing an example of display of index images in a case having an included-over-time relationship; and Fig. 16 is a diagram showing an example of the display section containing a list display area.

### BEST MODE FOR CARRYING OUT THE INVENTION

Embodiments of the method of and the device for retrieving information, and a computer program for executing the method according to the present invention on a computer will be described with reference to the accompanying drawings.

### First Embodiment

Fig. 1 is a block diagram showing the structure of a device for retrieving information according to a first embodiment of the present invention. As shown in Fig. 1, a data input processing section 1 carries out input processing of a motion picture work or the like which is the object of retrieval, and stores the motion picture work or the like as a file of digital data in a database section 3 to a control processing section 10. As file formats for storing the motion picture as digital data, MPEG, AVI, QuickTime, and the like are known. In a case of a motion picture or the like which is stored by a video tape recorder, the motion picture or the like can be stored as a file of predetermined digital data by using a video capture board. A series of data which is continuous over time, for example, one movie work or one television program or the like, is stored as a single file as retrieval object data D1 in the database section 3.

A playback processing section 8 reads out the file of the retrieval object data D1 which is stored as digital data, and displays and outputs the file on the screen of a playback display section 12 of a display section 9. For file formats such as MPEG, AVI, QuickTime, and the like, software components such as WindowsMediaPlayer or QuickTimePlayer or the like are presented. By these software components being incorporated in the application program of the control processing section 10, the playback processing section 8 is realized.

A data extracting section 4 takes out one part from the retrieval object data D1, and defines the part as a data unit, and stores the attribute of each data unit as one part of content describing data D2. Fig. 3 is a diagram showing an example of content describing data D2. In Fig. 3, for a 60 minute motion picture work, the respective data units are defined at three levels which are "route" which corresponds to the whole work, "part" which the "route" is partitioned into several of, and "scene" which further partitions the "part". Note that "title", "explanation", and "keyword" for each data unit, and "interval" which shows the duration time of the data unit, are included in the content describing data D3, and a feature amount which will be described later is added in correspondence with each data unit.

A feature amount extracting section 5 extracts a predetermined feature amount for each data unit, and the predetermined feature is stored as one part of the content describing data D2. In the content describing data D2 which is shown in Fig. 3, the three features of "movement", "color tint", and "brightness" for each data unit are determined, and these features are respectively expressed by using a number from "0" to "10". The feature amount of "movement" is defined such that, for example, data with absolutely no movement are "0", and the higher the number, the more intense the "movement". The feature amounts of "brightness" or "color tint" use, for example, feature amounts of "brightness" or "color tint" in which respective image frames which form the data units are averaged.

In this way, the retrieval object data D1 and the content describing data D2 of the respective data units which form the retrieval object data D1 are stored in the database section 3. Namely, in accordance with the flowchart which is shown in Fig.2, first, the data input processing section 1 stores the retrieval object data D1 in the database section 3 (step S101). Thereafter, the data extracting section 4 defines the data units in the retrieval object data D1, and acquires the attributes in the respective data units such as the title or the interval or the like as one part of the content describing data D2 (step S102). Further, the feature amount extracting section 5 extracts the feature amounts in the respective data units, and acquires the feature amount as one part of the content describing data D2 for the corresponding data unit (step S103). In this way, the content describing data D2 for a single retrieval object data D1 is acquired, and retained in the database section 3 (step S104). The processing of the retention of the content describing data D2 is repeatedly carried out for the successively inputted retrieval object data D1.

A pair of the retrieval object data D1 and the content describing data D2 is retained in the database section 3. Thereafter, the user retrieves the desired work or a part or scene in the work from the retrieval object data D1 of these motion picture works. When a retrieval instructing section 2 designates a keyword as the retrieval condition, the control processing section 10 retrieves data units in which this keyword is contained in the title or the explanation or the like of the content describing data D2.

A sorting section 6 carries out sorting processing to order on the basis of the feature amounts corresponding to the respective data units, for data units which are retrieved by the control processing section 10. In the content describing data D2 which is shown in Fig. 3, three feature amounts of "movement", "color tint", and "brightness" are defined. The sorting section 6 selects one feature amount thereamong, and orders the respective data units on the basis of the selected feature amounts. In this case, the sorting section 6 may carry out predetermined weighting with respect to the feature amounts of the respective data units so as to obtain a weighted average, and may order the respective data units on the basis of the averaged value. Further, for the data units which are retrieved, the sorting section 6 may select the feature amount, such that the dispersion of values is the largest, from among the three feature amounts, and may carry out ordering on the basis of the selected feature amount.

An index image generating section 7 generates an index image in which the feature amounts of the respective data units which are retrieved are visualized, and arranges and displays the index image on the display section 9 in accordance with the ordering by the sorting section 6. Fig. 4 is diagram showing one example of generation of index images. In Fig. 4, when the data units which are retrieved by the control processing section 10 are three data units which are "scene A", "scene B", and "scene C", the sorting section 6 selects the feature amount of "movement" among the feature amounts of the respective data units. The sorting section 6 carries out ordering in the order of largeness of the feature amount of "movement". Namely, the feature amounts of "movement" of "scene A", "scene B", and "scene C" are respectively "8", "5", and "2", and the sorting section 6 carries out ordering in the order of "scene A" - "scene B" - "scene C". The index image generating section 7 generates an index image, which is a rectangle having a constant width and having length which is proportional to the duration times of the respective data units, and in which a black outer frame of the rectangle is formed, and the inner portion is shown by the density, color, pattern, and the like which correspond to the feature amounts. Further, the index image generating section 7 connects the respective index images in the order of ordering by the sorting section 6, and the connected index images are displayed on a playback instructing section 11 of the display section 9.

Fig. 5 is a diagram showing the screen structure of the display section 9. The display section 9 has a data playback area E1 in which the playback-processed retrieval object data D1 or data units are played back, an index image presenting area E2 in which the index images are arranged, a slide bar B1 which corresponds to the lateral direction length of the index image presenting area E2 and is disposed so as to be parallel along the lateral direction, a play button B2 which instructs playback, and a stop button B3 which instructs stopping of playback.

Because the index images which are displayed in the index image presenting area E2 are enclosed with the black outer frames for each data unit, the user can visually confirm at a glance that three scenes are selected as the data units which match the designated retrieval condition. Further, in the respective index images, the densities change on the basis of the feature amount of "movement" of each data unit. Thus, the user can estimate, without playing back the respective data units, how much "movement" is included in each scene.

When the user looks at the index images, for example, if the first "scene A" is judged to be a desired scene, by dragging the knob of the slide bar B1 by a mouse, the knob is moved under the index image corresponding to "scene A". Thereafter, due to the user clicking the play button B2, the playback processing section 8 recognizes that the playback of "scene A" is instructed, and makes "scene A" be played back in the data playback area E1. The playback processing section 8 recognizes the index image which corresponds to the position of the knob of the slide bar B1, and recognizes "scene A" which corresponds to the index image, and on the basis of the content describing data D2, takes out "scene A" from the retrieval object data D1 and plays back "scene A".

By the way, in the above-described retrieval processing, an example of a case in which there are three data units which match the retrieval condition is described. However, a case in which the number of the data units increases will be considered. For example, a case in which there are about 100 data units which are retrieved is considered. When index images are not displayed, the user successively plays back all of the about 100 data units and confirms the contents. Further, even if index images are displayed, if the respective data units, i.e., the index images, are not sorted, the user cannot easily find the index image which matches the desired feature of "movement". Thus, after all, if a considerable number of data units is not played back, the target data unit cannot be obtained.

On the other hand, in the first embodiment, after sorting the index images, the index images are arranged and displayed in the index screen presenting area E2, and thus, the target data unit can be efficiently found. Namely, first, the user selects the index image which corresponds to the center of the slide bar with the knob of the slide bar B1, and thereafter, the users clicks the play button B2 and plays back the data unit corresponding to the selected index image. The user compares the amount of "movement" that the user has imaged and the amount of "movement" of the data unit which is played back. As a result of this comparison, when the amount of "movement" of the data unit which is played back is greater than the amount of "movement" that the user has imaged, the user moves the knob of the slide bar B2 to the right, and a data unit in which the amount of "movement" is small is selected and played back. On the other hand, as a result of the comparison, when the amount of "movement" of the data unit which is played back is smaller than the amount of "movement" that the user has imaged, the user moves the knob of the slide bar B2 to the left, and a data unit in which the amount of "movement" is large is selected and played back. By repeating such an operation, the user can precisely correspond the relationship between the amount of "movement" and the position in the index screen presenting area E2. As a result, by using the position in the index screen presenting area E2 as a start, the target data unit can be quickly and easily found.

Next, the retrieval processing performed by the information retrieval device will be described with reference to the flowchart which is shown in Fig. 6. In Fig. 6, the control processing section 10 receives a retrieval request from the retrieval instructing section 2 (step S201), and retrieves data units which satisfy the retrieval condition from the retrieval object data D1. Thereafter, the sorting section 6 acquires the content describing data D2 corresponding to the data units which satisfy the retrieval condition (step S202), and carries out ordering of the respective data units on the basis of the content describing data D2 (step S203). Thereafter, the index image generating section 7 generates index images corresponding to the respective data units on the basis of the content describing data D2, and the generated index images are arranged and displayed in correspondence with the ordering by the sorting section 6 (step S204). Thereafter, in accordance with the selection-instruction of the index image by the playback instructing section 11, playback processing of the data unit which corresponds to the selected-instructed index image is carried out (step S205), this processing is completed. Next, the processing for extracting the feature amount performed by the feature amount extracting section 5 will be described in detail. Extracting of the feature amounts of "movement", "color tint", and "brightness", which are described above, will be sequentially described. First, the extraction of the feature amount of "movement" will be described. The extraction of the feature amount is extraction of the movement amount of the photographed subject at an "interval" which is defined by the data unit. For example, as shown in Fig. 7, let us assume that the photographed subject moves from the coordinate (XA, YA) to the coordinate (XB, YB) in the dynamic image. In order to detect the movement amount of the photographed subject, it suffices to define the position of the photographed subject at the starting frame F1 in Fig. 7, and to achieve a matching relating to the regions between frames. The definition of the position of the photographed subject at the starting frame F1 may be designated by the user, or may be automatically judged by carrying out regional division of the image. It is assumed here that the position of the photographed subject is defined in advance.

By achieving matching with respect to the ending frame Fn in the data unit, the coordinate of the movement destination of the position of the center of gravity of the region can be obtained. Further, by repeating the matching processing at an arbitrary frame interval, the coordinate of the movement destination of the photographed subject in the ending frame Fn may be determined. The movement amount is determined by the coordinate of the center of gravity at the starting frame F1 and the coordinate. of the movement destination. In Fig. 7, because the photographed subject moves from the coordinate (XA, YA) to the coordinate (XB, YB), the movement amount can be determined by computing the distance between the two points. Then, this movement amount is the feature amount.

Note that, not only the position of the photographed subject at the end frame Fn, but also all of the center of gravity positions obtained by repeating matching at an arbitrary frame interval may be stored, and a value in which the movement amounts between frames are averaged may be the feature amount. Further, the maximum value or the minimum value of the movement amount may be the feature amount.

Next, the feature amount of "color tint" will be described. The feature amount of "color tint" is extracted on the basis of changes of the color tint in the data unit. The peak values which are obtained by preparing respective color histograms at the start frame F1 and the end frame Fn are representative values of the colors at the respective frames. Considering the respective color elements of R, G, and B as three dimensional coordinates, the distance between representative values at the start frame F1 and the end frame Fn are determined, and are compared with the maximum value of the distance which the color space can take, and a value showing what degree of proportion there is the feature amount.

First, respective data of the start frame F1 and the end frame Fn in the data unit are acquired, and at the respective frames, the color element values of R, G, and B of all of the pixels are acquired, and made to be color histograms. If the color element values of R, G, and B are respectively represented by 8 bits, processing must be carried out with respect to a histogram having entries of about 16,770,000 colors. Thus, only the high order 4 bits among the 8 bits are used, and a color histogram which is decreased to 4,096 colors is used. A histogram relating to the 4,096 colors after decreasing the colors is prepared. The peak value is taken out from the color histogram and stored, and the feature amount is determined by using the stored peak value.

Namely, a distance LD in a three dimensional space between the peak value (coordinate PK in Fig. 8(b)) at the start frame F1 and the peak value (coordinate PL in Fig. 8(a)) at the end frame Fn, and a distance LB between a maximum value Pmax and a minimum value Pmin in a color space when only the high order 4 bits among the 8 bits are used, are compared. The ratio of the distance LD with respect to the distance LB is the feature amount. For example, if the coordinate PK of the peak value of the start frame F1 in the data unit is PK(R, G, B) = (192, 128, 64), and the coordinate PL of the peak value of the end frame Fn is PL(R, G, B) = (160, 96, 80), the three dimensional distance LD between the coordinate PK and the coordinate PL is "48". On the other hand, because the maximum value Pmax (R, G, B) = (240, 240, 240) and the minimum value Pmin (R, G, B) = (0, 0, 0), the three dimensional distance LB between the maximum value Pmax and the minimum value Pmin is "415.69". Accordingly, because the feature amount is the distance LD/the distance LB, 48/415.69 = 0.12. Note that, in the same way as the case of the feature amount of the movement amount, as the value which is used for the numerator of the feature amount, the average value of the peak values which are acquired for arbitrary frames may be used, or the maximum value or the minimum value of the peak values may be used.

Further, intensity, which shows to what degree the respective color elements of R, G, B in the data unit affect the color, may be the feature amount. The intensity can be obtained by examining which of the color elements is the largest among the respective color elements of R, G, B at the peak values of the results of preparing the color histograms for arbitrary frames of the data unit, and by dividing the number of the frames in which a specific element is the largest by the total number of frames which are the objects of examination. Color histograms which are color-reduced in the same way are prepared for arbitrary frames in the data unit, and the respective peak values are acquired and stored. With reference to the respective color elements of R, G, B of the peak values, the color element which has the largest value among the respective color elements of R, G, B is the representative color element at each frame. Note that, at the time the value is determined, the respective color elements may be weighted. With regard to the peak values which are acquired at respective frames, due to all of the representative color elements being determined, the ratio of the amount of the data unit which is taken up by the specific color element as the representative color element, namely, the intensity, can be determined. For example, when the intensity of the "R" color element is determined, if the results of examining the color elements of the peak value at each frame are the values which are shown in Fig. 9, because the R color element is the most numerous at all of the frames "1" to "n" of the data unit, the intensity of the R color element is 100%. The R color element may be used as the feature amount.

Next, the feature amount of "brightness" will be described. As for the feature amount of "brightness", the representative value of "brightness" can be made to be the feature amount by preparing a luminance histogram relating to arbitrary frames in the data unit and determining the peak values. Further, a value which averages the peak values determined at an arbitrary frame interval may be used, or the maximum value or minimum value maybe used. Moreover, luminance histograms for the start frame and the end frame in the data unit may be prepared, and the difference between the peak values may be the feature amount of "brightness".

In this way, the feature amount extracting section 5 can extract the movement of the photographed subject or information such as color tint, brightness, or the like in the data unit as the feature amount. Note that all of the aforementioned respective feature amounts are described to be a single parameter with respect to a single data unit. However, a single data unit may be made to have a plurality of different feature amounts.

Next, making the feature amount into an index image by the index image generating section 7 will be described in detail. First, a case in which the index image is filled in with a single color by the extracted feature amount will be described. Fig. 10 is a diagram showing an example of an index image in which the feature amount is filled in with a single color. In Fig. 10, for example, if the peak value of luminance value is determined, this peak value is used as the feature amount, and an index image which is filled in is prepared by using this feature amount as the pixel value. Namely, all of the regions of the index image may be filled in with the obtained pixel value. In Fig. 10, when the peak value of the luminance value is "200", a pixel value in which all of the color elements of R, G, B are "200" is applied to and fills in the index image.

For making the other feature amounts into index images, the index image may be prepared by changing the area of the region which is filled in the index image in accordance with the proportion with respect to the maximum value which the feature amount can acquire. For example, when the movement amount is used as the feature amount, the maximum movement amount which can be acquired is made to be "10", and when the movement amount is "5", an index image which is filled in by the specific color to a height of 50% of the index image region is prepared. In the case of the feature amount of "color tint" which is described above, because the feature amount is "0.12", a region of 12% from the bottom of the index image region is filled in with the specific color.

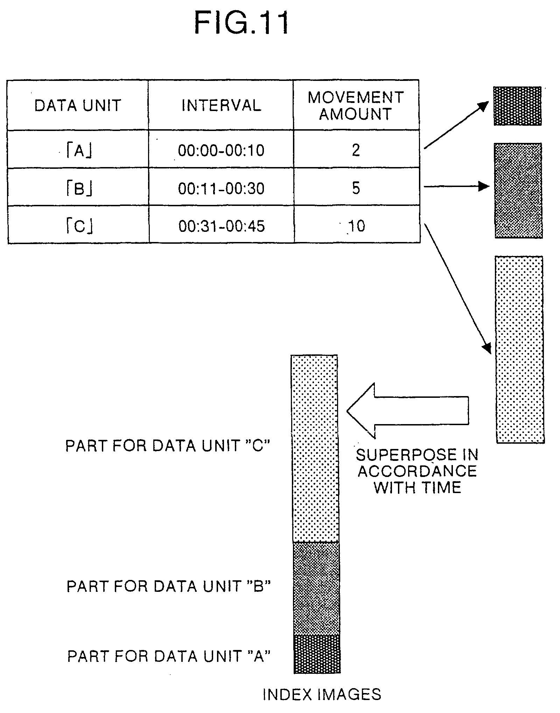

Further, for making the other feature amounts into index images, when there are a plurality of feature amount data with respect to a single feature in a single data unit, such as, for example, feature amounts relating to the luminance are the number of frames which is defined as the data unit, a plurality of images, in which the luminance of the color which fills in the region is changed in accordance with time, may be prepared, and the further back in time the image, the further forward the screen may be superposed. For example, as shown in Fig. 11, when a single data unit has a parent-child relationship which is structured by the three data units of "A" to "C" and a single data unit has different movement amounts at the time region, when a single data unit is made into an index image, for each of the respective data units "A" to "C", the movement amount is shown by the area ratio from the bottom portion of the index image. The respective time regions are superposed such that, the earlier the time of the data unit, the further forward the data unit is displayed and the lower the luminance is set, and the later the time of the data unit, the further back the data unit is displayed and the higher the luminance is set. Note that, in this case, although an example of preparing an index image which is vertically long is described, the index image may be laterally long.

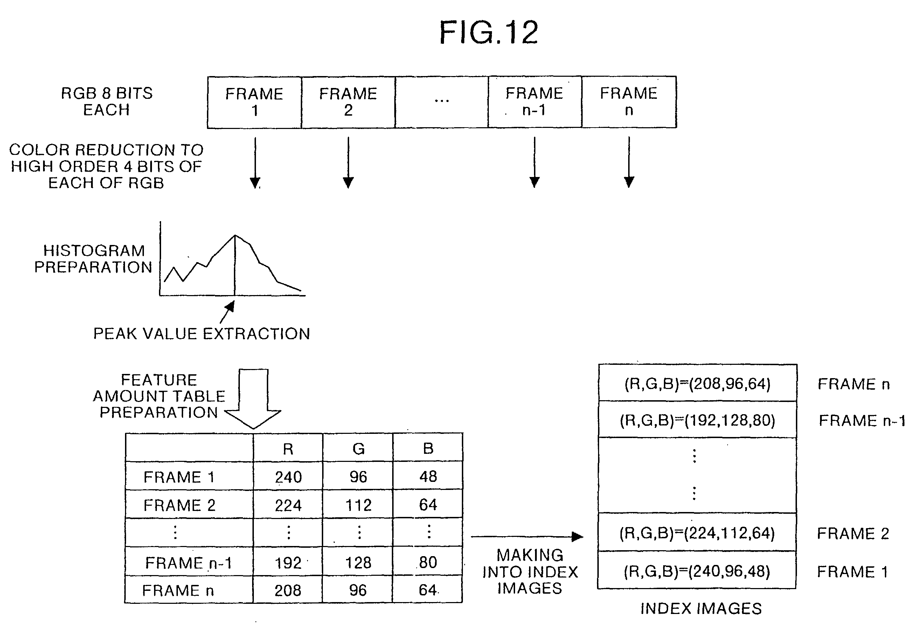

Moreover, for making another index image for a single data unit when a given single feature has a plurality of feature amount data, if the longitudinal direction or the lateral direction of the index image represents time in the data unit, the pixel values expressing the feature amounts may be arranged vertically or laterally in accordance with time. As shown in Fig. 12, when respective peak values are acquired for each of the frames "1" to "n" in a single data unit, the pixel values having the peak values are superposed in order from the bottom of the index image region, and a single index image is prepared.

Note that, in a case of imparting width to the index image, a single index image may be prepared by superposing, several frames worth in order from the bottom of the index image region as described above, data which are expressed by acquiring not only the peak values, but the elements of the highest n orders, and laterally the aligning the pixel values showing the respective elements. Further, it is possible to not merely superpose several frames worth of feature value data, and to step-wise express the intermediate colors between the respective frames between the elements of respective frames, so as to express the state of the color change.

Moreover, at the time of preparing the index image, the width of each data unit may be changed in accordance with the duration time of the data unit. For example, when the duration time of the data unit "A" is "5" seconds, the duration time of the data unit "B" is "10" seconds, and the duration time of the data unit is "15" seconds, when the length of the lateral direction of the entire index image is prescribed by "150" pixels, region allocation, which is proportional to the duration time of the data unit, is carried out by making the region allocated to data unit "A" to be "25" pixels in the lateral direction, the region allocated to data unit "B" to be "50" pixels, and the region allocated to data unit "C" to be "75" pixels. Further, with respect to a single data unit, when a given single feature has a plurality of feature amount data, the above-described making into index images is carried out for the respective regions which have been region-allocated.

By carrying out the above-described making into index images which was described above, the changing of the feature amounts between the data units or in the data units can be visualized, and the user can, easily and quickly, recognize the features of the data units.

Note that, the first embodiment explained one device for retrieving information. However, many such devices may be dispersed on a network such as the Internet or the like.

### Second Embodiment

Next, a second embodiment of the present invention will be described. In the second embodiment, the data extracting section 4 defines the data units automatically from the retrieval object data D1. Note that, the structure other than the data extracting section 4 in the second embodiment is the same as that of the first embodiment.

The data extracting section 4 detects the switching of the scene/topic of the retrieval object data D1 which is inputted from the data input processing section 1, and defines the dataunits automatically. Note that, the point at which the topic is switched is called the topic switching point.

The data extracting section 4 detects the switching point of the scene by comparing the luminance value between the frames and a threshold value, which is a statistical value of the luminance value, and by detecting the portion where the luminance value between the frames exceeds the threshold value. Further, the data extracting section 4 computes the correlation of the entire frame image, and detects a frame in which this computed value is less than or equal to a predetermined threshold value, and detects this frame as the switching point of the scene. On the other hand, the data extracting section 4 uses both audio information and motion picture information in video data, and for example, judges a point, in which there is both a pause in the audio and a switching of scenes in the motion picture, to be the topic switching point, and detects the topic switching point.

Moreover, in order to detect the switching of the scene/topic with high precision, the data extracting section 4 extracts a keyword by making use of the language information in the audio information, and judges the frame of a portion in which changes occur in the keyword to be the topic switching point, or judges a frame in which the audio level rapidly changes to be the topic switching point, and judges a frame in which the luminance in the motion picture rapidly changes between scenes to be the topic switching point.

The data extracting section 4 defines the data units automatically by making the switching point of the scene/topic, which is detected as is described above, to be the start point or the end point of a data unit. Note that, the attribute information such as the title and the like in the content describing data D2 may be automatically added on the basis of a keyword in the projected information or the audio information.

### Third Embodiment

Next, a third embodiment of the present invention will be described. In the third embodiment, the processing of the playback instructing section 11 and the playback display section 12 further improve the operability and the degree of recognition by the user at the time of retrieval, and quick retrieval processing is possible. Note that, the structure other than the data extracting section 4 and the display section 9 in the third embodiment is the same structure.

First, the data extracting section 4 defines in advance the static image of an arbitrary frame in the data unit as the representative image, and sets it in the content describing data D2. The definition of the representative image may be designated manually, or the start frame in the data unit, or the image frame of one second after the start of the data unit, or the like may be automatically set.

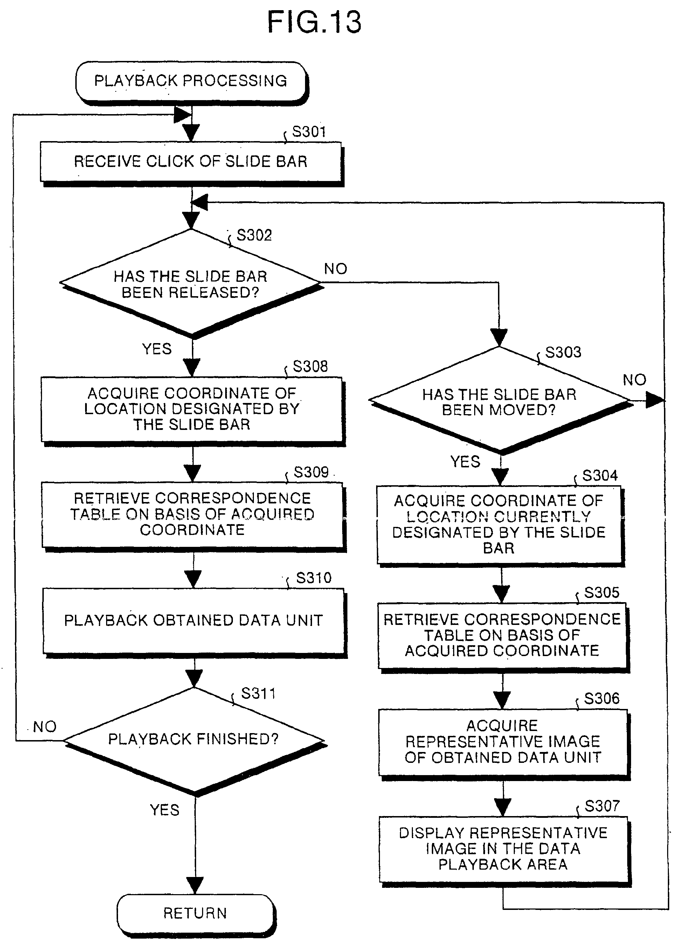

The playback processing procedure at the time of retrieval by using the playback instructing section 11 will be described with reference to the flowchart which is shown in Fig. 13. Note that this processing corresponds to the detailed processing of the playback processing procedure (step S205) which is shown in Fig. 6. Further, the playback instructing section 11 carries out processing interlockingly with the playback processing section 8.

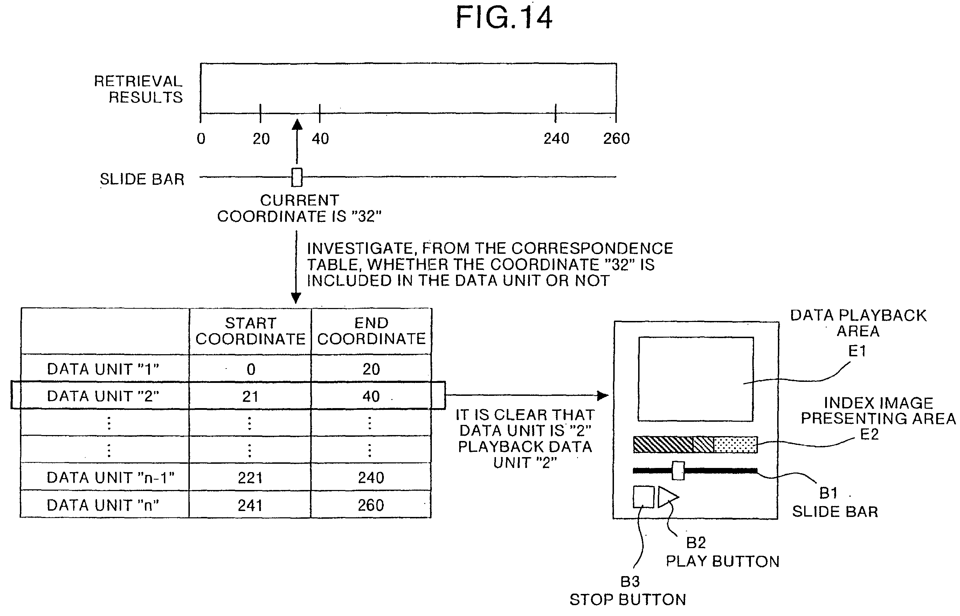

In Fig. 13, the playback processing section 8 receives the click of the knob of the slide bar B1 in the playback instructing section 11 (step S301). Thereafter, the playback processing section 8 judges whether the knob of the slide bar B1 has been released, namely, is released or not (step S302). When the knob of the slide bar B1 is not released (step S302, NO), it is further judged whether the knob of the slide bar B1 has moved or not (step S303). When the knob of the slide bar B1 has not moved (step S303, NO), the routine moves on to step S302, and when the knob of the slide bar B1 has moved (step S303, YES), the coordinate of the location which the slide bar B1 is currently designating is acquired (step S304). Moreover, on the basis of the acquired coordinate, a correspondence table is retrieved (step S305). The correspondence table, as shown in Fig. 14, is a table in which the respective data units "1" to "n", and the start coordinate and the end coordinate of the index image which corresponds thereto, are held in pairs.

Thereafter, the playback processing section 8 acquires the representative image which corresponds to the data unit which is acquired on the basis of the correspondence table (step S306). Further, the static image of the representative image is display-outputted in the data playback area E1 (step S307), and the routine moves on to step S302.

On the other hand, when the knob of the slide bar B1 has been released (step S302, YES), the coordinate of the location which is designated by the knob position of the slide bar B1 is acquired (step S308). Thereafter, the correspondence table is retrieved on the basis of the acquired coordinate, and the corresponding data unit is acquired (step S309). Thereafter, the acquired data unit is played back (step S310). Thereafter, it is judged whether the playback of the data unit is finished or not (step S311). If the playback is not finished (step S311, NO), the routine moves on to step S301, and the processing which is described above is repeated. If the playback is finished (step S311, YES), the routine returns to step S205.

An example of the playback processing will be described with reference to Fig. 14. First, as described above, the relationships between the data units and the positions of the coordinates of the index images are held as the correspondence table. For example, the index image which corresponds to the data unit "1" is set as an image which exists within a range in which the lateral coordinate value in the index image presenting area E2 is "0" to "20".

In the playback instructing section 11, the slide bar B1 which has the same length as the length of lateral direction of the index image presenting area E2 is disposed in parallel. If the knob of the slide bar B1 is dragged and moved to an arbitrary position, the information of that coordinate position is acquired, and the data unit at that coordinate position is determined on the basis of the correspondence table. For example, when the coordinate value of the knob of the slide bar B1 is "32", the correspondence table is retrieved, and the data unit "2" is determined and outputted.

When the knob of the slide bar B1 is in a dragged state, the representative image of the data unit which corresponds to the current coordinate position is displayed in the data playback area E1, and when the knob of the slide bar B1 is released, the motion picture of the data unit which corresponds to the current coordinate position is displayed in the data playback area E1. Namely, by continuing to move the knob of the slide bar B1 to the left and the right, the representative images of the index images which correspond to the respective data units are continuously switched, and can be displayed in the data playback area E1. By only releasing the knob of the slide bar B1, the motion picture of the data unit of the index image which corresponds to the released coordinate position is played back. Note that, due to the frame of the current index image, which is designated by the knob of the slide bar B1, being displayed in a greater than usual thickness, it can be easily understood which of the index images is the index image which the user is currently selecting.

By displaying the representative image at the time of moving the knob of the slide bar B1, and emphasizingly displaying the index image which corresponds to the current position of the slide bar B1, and starting playback of the data unit by only releasing the knob of the slide bar B1, and the like, grasping of the feature amount by the index image can be carried out more easily, and the target data unit can be quickly obtained, and the retrieval efficiency of the data unit is improved. A data unit, which has a prescribed parent-child relationship in the dynamic image, exists in the data units. In this case, at the time of the retrieval results by the control processing section 10, there are cases in which both the parent data unit and the child data unit are returned as the retrieval results. In this case, because the display region is useless if index images which correspond to both data units are displayed, the index image generating section 7 does not display the index image of the child data unit which is included over time, and displays only the parent data unit. Namely, at the stage when the data unit is returned as the retrieval results, the index image generating section 7 investigates the contents of the data unit, and judges whether or not the contents are duplicated over time in the same dynamic image. When the contents are duplicated, the index image generating section 7 displays only the index image of the parent data unit.

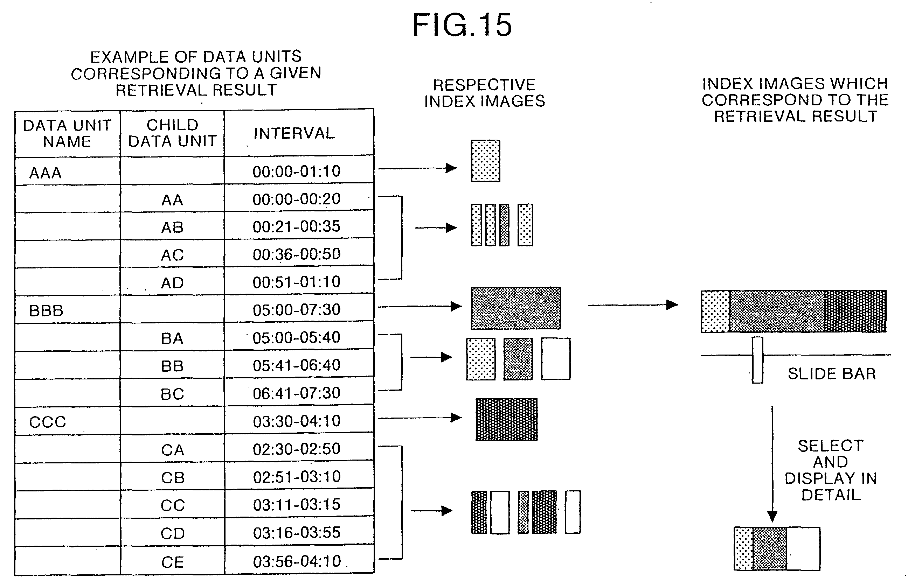

Note that, when the data unit which corresponds to the index image is selected by the slide bar B1, when a data unit which is included in this data unit exists, the index image of the included data unit may be further displayed. For example, when a data unit which has a hierarchical relationship as shown in Fig. 15 exists, at the first stage, the index images which correspond to the data units "AAA", "BBB", "CCC" are displayed, and thereafter, for example, when the data unit "BBB" is selected, as the second stage, the index images which correspond to the data units "BA", "BB", "BC" which are included in the data unit "BBB" are displayed in detail. In this way, because the information of the redundant index images is removed and the target data unit can be retrieved in steps, the retrieval efficiency can be improved.

The general playback processing of the data units which are rearranged in correspondence with the ordering by the sorting section 6 will be described. The playback processing which is described above retrieves the target data unit efficiently by using the slide bar B1 and the index images. The respective data units are ordered on the basis of the feature amounts, and even if playback is carried out in accordance with this order, efficient retrieval of the data units is possible.

First, the left edge of the index image which is disposed in the index image presenting area E2 which is shown in Fig. 14 is the start position over time, and the right edge is the end position over time If the play button B2 is clicked, the knob of the slide bar B1 moves in accordance with time. This is realized by computing the sum of the lengths of the'data units of the retrieval results in advance, and making the positions of the slide bar B1 correspond to time. When playback is started, the slide bar B1 moves in accordance with time. Because the positions of the slide bar B1 and the index images correspond, in accordance with the positions of the knob of the slide bar B1, entry into an index image region of another data unit and how long it will take to enter into the next index image region can be known. Accordingly, before entering into the region of another data unit, the information of the dynamic image which the next data unit expresses is acquired, and this information is displayed at the instant when the data unit is switched. In this way, the data units can be successively played back in the order in which the results of retrieval are aligned, and the differences in the feature amounts between the data units can be easily grasped.

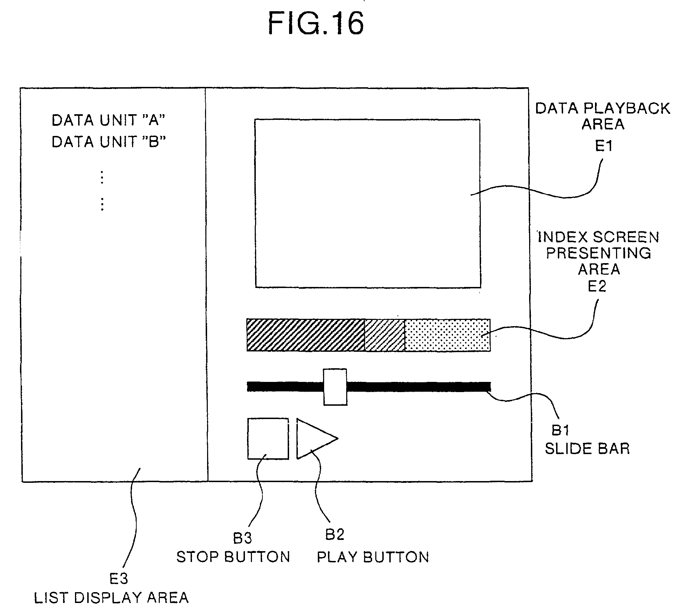

Next, list display of the data units will be described. When the data units have a hierarchical structure, what kind of data units are included in the child data units of the hierarchical structure are list-displayed in a display region at the side of the index image which is displayed. As shown in Fig. 16, the list displays are displayed in a list display area E3 which is adjacent to the data playback area E1 which is the playback display section 12, the index screen presenting area E2, and the regions of the respective GUIs of the slide bar B1 which is the playback display instructing section 11, the play button B2, and the stop button B3.

When the data unit of the retrieval object is selected, the retrieval of the child data units of the selected data unit is carried out, and the child data units are acquired. Titles are acquired from the content describing data D2 which corresponds to the acquired child data units, and the titles are displayed in order of time in the list display area E3. For example, by using the content describing data D2 which is shown in Fig. 3, when the data unit of "part 1" is selected as the playback object, "panda" to "Japanese monkey" are displayed in the list display area E3. During playback, emphasizing display, such as reversely-displaying, in the list display area E3, the characters of the list of the child data units which are currently the objects of playback, or the like is carried out. It can be grasped which data units are the data units which are currently being played back. In this way, because the details of contents of the data units which are the objects of playback can be grasped, the efficiency of retrieving the data units can be improved. Further, due to the objects of playback in the list being emphasizingly displayed, the contents of the child data units which are the objects of current playback can be known, and thus, the efficiency of retrieving the data unit can be improved.

In this way, because playback of the dynamic image corresponding to the index image by the slide bar B1 can be carried out, the target scene can be quickly retrieved. Further, because the index image of the data unit which is included over-time is not displayed, only the details of'the target data unit can be viewed, and the retrieval efficiency is improved. Moreover, due to the list of the data units being displayed, because the contents of the data units which are included in.the data units which are the objects of playback can be known, the retrieval efficiency is improved. Further, at the time of the list display, because the part on the list display area E3, which corresponds to the part which is being played back, is emphasizingly displayed, which of the child data units in the selected data units are the objects of playback can be easily known, and the retrieval efficiency is improved.

As described above, in the present invention, the defining unit defines, as a plurality of information units, portion information which is continuous over time and which forms the information which is continuous over time which is inputted from the input processing unit. The feature amount extracting unit extracts a predetermined feature amount for each information unit, and the sorting unit orders the respective information units on the basis of the feature amounts of the respective information units. The index image generating unit generates, for each information unit, a visualized index image on the basis of the feature amount, and arranges-outputs the index information on the basis of the ordering of the sorting unit. The playback instructing unit instructs the playback unit to carry out playback processing of the information units corresponding to the index images, and the playback unit plays back at least the information which is continuous over time and the information units. Therefore, the effect is achieved that the user can, quickly and easily, retrieve the target information unit on the basis of the visualized index image which is expressed by the feature amount.. Further, because the index images are ordered and arranged on the basis of the feature amounts, the effect is achieved that the user can rapidly and easily carry out retrieval of information units on the basis of the feature amounts.

In accordance with the next invention, the defining unit defines the information units by applying thereto a hierarchical relationship which is included over time. Thus, the defining of the information units can be flexibly carried out, and the information units are hierarchical. Therefore, the effect that the retrieval efficiency can be improved is achieved.

In accordance with the next invention, the defining unit defines scenes within the information which is continuous over time or switching points of topics as a starting point and an ending point of the information unit, and can define the information units automatically. Thus, the effect that the defining of the information units can be quickly and easily carried out is achieved.

In accordance with the next invention, the feature amount extracting unit extracts a feature amount relating to the movement of the photographed subject, and can retrieve the.desired information unit on the basis of the feature of the movement of the photographed subject. Thus, the effect is achieved that, in particular, in the case of information which is continuous over time and in which there is a feature in the movement of the photographed subject, the desired information unit can be quickly and easily retrieved.

In accordance with the next invention, the feature amount extracting unit extracts a feature amount relating to the color tint or a change in color tint, and can retrieve the desired information unit on the basis of the feature of the color tint or the change in the color tint. Thus, in particular, in the case of information which is continuous over time and in which there is a feature in the color tint or the change in the color tint, the effect that the desired information unit can be quickly and easily retrieved is achieved.

In accordance with the next invention, the feature amount extracting unit extracts a feature amount relating to brightness or a change in brightness, and can retrieve the desired information unit on the basis of the brightness or a change in the brightness. Thus, in particular, in the case of information which is continuous over time and in which there is a feature in the brightness or the change in the brightness, the effect that the desired information unit can be quickly and easily retrieved is achieved.

In accordance with the next invention, the index image generating unit generates an index image which is vertically long for each information unit, and arranges and outputs the index images in a lateral direction. The index images of the respective information units are easily viewed and are easily recognized. Thus, the effect that the desired information unit can be quickly and easily retrieved is achieved.

In accordance with the next invention, the index image generating unit generates an index image which is laterally long for each information unit, and arranges and outputs the index images in a vertical direction. The index images of the respective information units are easily viewed and are easily recognized. Therefore, the effect that the desired information unit can be quickly and easily retrieved is achieved. In accordance with the next invention, the index image generating unit forms an index image having a width which is proportional to a duration time of the information unit. Grasping, over time, of the information units can be carried out easily. Thus, the effect that the desired information unit can be quickly and easily retrieved is achieved.

In accordance with the next invention, when a current, information unit has an information unit which is included over time, the index image generating unit generates and arranges-outputs an index image of the current information unit. 'An index image of the information unit which is included over time is not displayed. Thus, the effects are achieved that display of useless index images is prevented, detailed information of the information unit relating to the desired information unit can be obtained, and efficient retrieval can be carried out.

In accordance with the next invention, the playback instructing unit displays a slide bar and the index images in parallel, and selects an index image corresponding to a position designated by the slide bar. The relationship between the slide bar and the information unit which corresponds to the index image can be easily grasped. Thus, the effects that the operability at the time of retrieving the desired information unit is improved and the desired information unit can be quickly and easily retrieved are achieved.

In accordance with the next invention, the playback instructing unit instructs the playback unit to display the representative image of the information unit corresponding to the index image corresponding to the position designated by the slide bar, while a knob of the slide bar is being dragged, and the playback unit displays the representative image. Thus, the effect that the feature of the index image can be more easily grasped and can be more quickly and easily retrieved is achieved.

In accordance with the next invention, the playback instructing unit instructs the playback unit to playback the information unit corresponding to the index image corresponding to the position designated by the slide bar, when a knob of the slide bar is released. The playback unit playbacks the information unit immediately. Therefore, the effect is achieved that the display instruction of the information unit can be quickly and easily carried out, and as a result, quick and easy retrieval can be carried out.

In accordance with the next invention, the playback unit plays back the information units continuously, in accordance with the order ordered by the sorting unit. Thus, the effect that the user can retrieve the desired information unit quickly without carrying out a selecting operation separately in time is achieved.

In accordance with the next invention, the playback unit displays a list of other information units including information units which are currently being played back. Thus, for example, when the information unit has a hierarchical relationship, the effects are achieved that the contents of the child information units which structure the information unit which is currently played back can be grasped, and the desired information unit can be quickly and easily retrieved.

In accordance with the next invention, the playback unit emphasizingly displays a list of the information units which are currently being played back. Thus, for example, when the information units has ahierarchical relationship, the effects are achieved that it can be grasped which information unit, among the child information units which structure the information unit which is currently being played back, is being played back, and the desired information unit can-be quickly and easily retrieved.

In accordance with the next invention, by a defining step, portion information, which is continuous over time which forms the information which is continuous over time, is defined as a plurality of information units. By a feature amount extracting step, a predetermined feature amount is extracted for each information unit. By a sorting step, the respective information units are ordered on the basis of the feature amounts of the respective information units. By an index image generating step, for each information unit, a visualized index image is generated on the basis of the feature amount, and the index information is arranged-outputted on the basis of the ordering by the sorting step. By a playback step, at least the information units are played back on the basis of an instruction for playback processing of information units corresponding to the index images. Thus, the effect is achieved that the user can quickly and easily retrieve the target information unit on the basis of the index image which is expressed by the visualized feature amount. Further, because the index images are ordered and arranged on the basis of the feature amounts, the effect is achieved that the user can carry out the retrieval of the information unit on the basis of the feature amount quickly and easily.

In accordance with the next invention, the defining step defines the information units by applying thereto a hierarchical relationship which is included over time. Thus, the effects are achieved that the definition of the information unit can be flexibly carried out, and due to the information unit being hierarchical, the efficiency of the retrieval can be improved.

In accordance with the next invention, the defining step defines scenes within the information which is continuous over time or switching points of topics as a starting point and an ending point of the information unit. Thus, the effect that the defining of the information unit can be quickly and easily carried out is achieved.

In accordance with the next invention, the feature amount extracting step extracts a feature relating to movement of a photographed subject. Therefore, in particular, in the case of information which is continuous over time and in which there is a feature in the movement of the photographed subject, the effect that the desired information unit can be quickly and easily retrieved is achieved.

In accordance with the next invention, the feature amount extracting step extracts a feature amount relating to color tint or to changes in color tint. Thus, in particular, in the case of information which is continuous over time and in which there is a feature in the color tint or a change in the color tint, the effect that the desired information unit can be quickly and easily retrieved is achieved.

In accordance with the next invention, the feature amount extracting step extracts a feature amount relating to brightness or to changes in brightness. Thus, in particular, in the case of information which is continuous over time and in which there is a feature in the brightness or the change in the brightness, the effect that the desired information unit can be quickly and easily retrieved is achieved.

In accordance with the next invention, the index image generating step generates an index image which is vertically long for each information unit, and arranges and outputs the index images in a lateral direction. Thus, the effect that the desired information unit can be quickly and easily retrieved is achieved.

In accordance with the next invention, the index image generating step generates an index image which is laterally long for each information unit, and arranges and outputs the index images in a vertical direction. Thus, the effect that the desired information unit can be quickly and easily retrieved is achieved.

In accordance with the next invention, the index image generating step forms an index image having a width which is proportional to a duration time of the information unit.' Thus, the effect that the desired information unit can be quickly and easily retrieved is achieved.

In accordance with the next invention, when a current information unit has an information unit which is included over time, the index image generating step generates and arranges-outputs an index image of the current information unit. Thus, the effects that the display of the useless index images is prevented, and detailed information of the information unit relating to the desired information unit can be obtained, and efficient retrieval can be carried out are achieved.

In accordance with the next invention, the playback step displays a slide bar and the index images in parallel, and selects an index image corresponding to a position designated by the slide bar, and plays back the information unit corresponding to the selected index image. Thus, the effects that the operability at the time of retrieving the information unit is improved and the desired information unit can be quickly and easily retrieved are achieved.

In accordance with the next invention, the defining step defines a static image of a predetermined frame within the information unit as a representative image, and the playback step displays the representative image of the information unit corresponding to the index image corresponding to the position designated by the slide bar, while a knob of the slide bar is being dragged. Thus, the effect that the feature of the index image can be more easily grasped and can be more quickly and easily retrieved is achieved.

In accordance with the next invention, the playback step starts playback of the information unit corresponding to the index image corresponding to the position designated by the slide bar, when a knob of the slide bar is released. Thus, the effect, that the playback instruction of the information unit can be quickly and easily carried out is achieved, and as a result, quick and easy retrieval can be carried out.

In accordance with the next invention, the playback step plays back the information units continuously, in accordance with the order ordered by the sorting step. Thus, the effect that the user can retrieve the desired information unit quickly without carrying out a selecting operation separately in time is achieved.

In accordance with the next invention, the playback step displays a list of other information units including information units which are currently being played back. Thus, for example, when the information unit has a hierarchical relationship, the effects that the contents of the child information units, which structure the information unit which is currently being played back, can be grasped, and the desired information unit can be quickly and easily retrieved, are achieved.

In accordance with the next invention, the playback step emphasizingly displays a list of the information units which are currently being played back. Thus, effects are achieved that which information unit, among the child information units which structure the information unit which is currently being played back, is being played back can be grasped, and the desired information unit can be quickly and easily retrieved.

In accordance with the next invention, due to a computer program which executes, on a computer, any of the methods which are described above, the effect that the operation of the method can be realized by a computer is achieved.

### INDUSTRIAL APPLICABILITY

As described above, the method of and the device for retrieving information, and the computer program for executing the method on a computer are useful for retrieving desired information in information which is continuous-over time such as motion picture information, music information or the like, and are suited to the retrieval of a desired data unit quickly and easily at the time of retrieving information which is continuous over time.

## Claims

1. A device for retrieving desired information from information which is continuous over time, said device comprising:
an input processing unit which carries out input processing of the information which is continuous over time;
a defining unit which defines, as a plurality of information units, portion information which is continuous over time which forms the information which is continuous over time;
a feature amount extracting unit which extracts a predetermined feature amount for each information unit;
a sorting unit which arranges in order the respective information units on the basis of the feature amounts of the respective information units;
an index image generating unit which generates, for each information unit, a visualized index image on the basis of the feature amount, and for arranging-outputting the index information on the basis of the ordering of the sorting unit;
a playback unit which plays back at least the information which is continuous over time and the information units; and
a playback instructing unit which instructs the playback unit to carry out playback processing of the information units corresponding to the index images.

2. The device according to claim 1, wherein the defining unit defines the information units by applying thereto a hierarchical relationship which is included over time.

3. The device according to claim 1, wherein the defining unit defines scenes within the information which is continuous over time or switching points of topics as a starting point and an ending point of the information unit.

4. The device according to claim 1, wherein the feature amount extracting unit extracts a feature amount relating to movement of a photographed subject.

5. The device according to claim 1, wherein the feature amount extracting unit extracts a feature amount relating to color tint or to changes in color tint.

6. The device according to claim 1, wherein the feature amount extracting unit extracts a feature amount relating to brightness or to changes in brightness.

7. The device according to claim 1, wherein the index image generating unit generates an index image which is vertically long for each information unit, and arranges and outputs the index images in a lateral direction.

8. The device according to claim 1, wherein the index image generating unit generates an index image which is laterally long for each information unit, and arranges and outputs the index images in a vertical direction.

9. The device according to claim 1, wherein the index image generating unit forms an index image having a width which is proportional to a duration time of the information unit.

10. The device according to claim 2, wherein, when a current information unit has an information unit which is included over time, the index image generating unit generates and arranges-outputs an index image of the current information unit.

11. The device according to claim 1, wherein the playback instructing unit displays a slide bar and the index images in parallel, and selects an index image corresponding to a position designated by the slide bar.

12. The device according to claim 11, wherein the defining unit defines a static image of a predetermined frame within the information unit as a representative image,
the playback instructing unit instructs the playback unit to display the representative image of the information unit corresponding to the index image corresponding to the position designated by the slide bar, while a knob of the slide bar is being dragged, and
the playback unit displays the representative image instructed by the playback instructing unit.

13. The device according to claim 11, wherein the playback instructing unit instructs the playback unit to playback the information unit corresponding to the index image corresponding to the position designated by the slide bar, when a knob of the slide bar is released, and
the playback unit starts playback of the information unit instructed by the playback instructing unit.

14. The device according to claim 1, wherein the playback unit plays back the information units continuously, in accordance with the order ordered by the sorting unit.

15. The device according to claim 1, wherein the playback unit displays a list of other information units including information units which are currently being played back.

16. The device according to claim 15, wherein the playback unit emphasizingly displays a list of the information units which are currently being played back.

17. A method of retrieving desired information from information which is continuous over time, the method comprising the steps of:
defining, as a plurality of information units, portion information which is continuous over time which forms the information which is continuous over time;
extracting a predetermined feature amount for each information unit;
arranging in order the respective information units on the basis of the feature amounts of the respective information units;
generating, for each information unit, a visualized index image on the basis of the feature amount, and for arranging-outputting the index information on the basis of the ordering by the sorting step; and
playing back at least the information units on the basis of an instruction for playback processing of information units corresponding to the index images.

18. The method according to claim 17, wherein the information units are defined in the defining by applying thereto a hierarchical relationship which is included over time.

19. The method according to claim 17 , wherein the defining step defines scenes within the information which is continuous over time or switching points of topics as a starting point and an ending point of the information unit.

20. The method according to claim 17, wherein a feature amount relating to movement of a photographed subject is extracted in the feature amount extracting step.

21. The method according to claim 17, wherein a feature amount relating to color tint or to changes in color tint is extracted in the feature amount extracting step.

22. The method according to claim 17, wherein a feature amount relating to brightness or to changes in brightness is extracted in the feature amount extracting step.

23. The method according to claim 17, wherein the index image generating step generates an index image which is vertically long for each information unit, and arranges and outputs the index images in a lateral direction.

24. The method according to claim 17, wherein the index image generating step generates an index image which is laterally long for each information unit, and arranges and outputs the index images in a vertical direction.

25. The method according to claim 17, wherein the index image generating step forms an index image having a width which is proportional to a duration time of the information unit.

26. The method according to claim 18, wherein, when a current information unit has an information unit which is included over time, the index image generating step generates and arranges-outputs an index image of the current information unit.

27. The method according to claim 17, wherein the playback step displays a slide bar and the index images in parallel, and selects an index image corresponding to a position designated by the slide bar, and plays back the information unit corresponding to the selected index image.

28. The method according to claim 27, wherein the defining step defines a static image of a predetermined frame within the information unit as a representative image, and
the playback step displays the representative image of the information unit corresponding to the index image corresponding to the position designated by the slide bar, while a knob of the slide bar is being dragged.

29. The method according to claim27, wherein the playback step starts playback of the information unit corresponding to the index image corresponding to the position designated by the slide bar, when a knob of the slide bar is released.

30. The method according to claim 17, wherein the playback step plays back the information units continuously, in accordance with the order ordered by the sorting step.

31. The method according to claim 17, wherein the playback step displays a list of other information units including information units which are currently being played back.

32. The method according to claim 31, wherein the playback step emphasizingly displays a list of the information units which are currently being played back.

33. A computer program containing instructions which when executed on a computer causes the computer to realize a method of retrieving desired information from information which is continuous over time, the method comprising the steps of:
defining, as a plurality of information units, portion information which is continuous over time which forms the information which is continuous over time;
extracting a predetermined feature amount for each information unit;
arranging in order the respective information units on the basis of the feature amounts of the respective information units;
generating, for each information unit, a visualized index image on the basis of the feature amount, and for arranging-outputting the-index information on the basis of the ordering by the sorting step; and
playing back at least the information units on the basis of an instruction for playback processing of information units corresponding to the index images.
